Europäisches Patentamt

(19) European Patent Office

Office européen des brevets

(11) Publication number: **0 175 143**
A2

# (12) EUROPEAN PATENT APPLICATION

(21) Application number: 85110168.3

(22) Date of filing: 13.08.85

(51) Int. Cl.⁴: **B 01 D 53/26**, B 67 D 1/04

(30) Priority: 21.08.84 CA 461490

(43) Date of publication of application: 26.03.86
Bulletin 86/13

(84) Designated Contracting States: AT BE CH DE FR GB IT
LI LU NL SE

(71) Applicant: FABRO INDUSTRIES INC., 301-35 South
Second Avenue, Williams Lake British Columbia,
V2G 3W3 (CA)

(72) Inventor: El-Farra, Said Omar Khalil, R.R. No. 3,
Box 2 Lexington Road, Williams Lake, B.C. (CA)

(74) Representative: Kern, Wolfgang Dipl.-Ing. et al,
Patentanwälte Tischer, Kern & Brehm
Albert-Rosshaupter-Strasse 65, D-8000 München 70 (DE)

(54) Method and apparatus for dispensing a carbonated beverage.

(57) An air pressure system for dispensing carbonated beverages that includes a power driven air compressor (31) providing a supply of air at pressure of about 140 PSIG. The compressed air passes through at least one condenser unit (32, 34) consisting of a conduit (35, 34A) of selected length. The compressed air is reduced to a selected temperature as it flows under pressure to a pressure tank. The compressed air discharges into a pressure tank in the bottom of which remains water removed from the compressed air and other impurities such as oil or the like from the compressor. The temperature controlled, substantially clean compressed air free of oil etc. is reduced in pressure to about 20 PSIG by a pressure reducing valve (45A). Such air pressure is used to propel liquid beverages from a container (21) or containers to a beverage dispensing valve (10) or valves. Preferably there are two condenser units (32, 34), one (34) being located internally of the pressure tank and the other (32) external thereto.

0175143

PATENTANWÄLTE

# TISCHER, KERN & BREHM

Albert-Rosshaupter-Strasse 65   D 8000 München 70 · Telefon (089) 7 60 55 20 · Telex 5214950 isar d · Telegramme Kernpatent München

Method and apparatus for dispensing a carbonated beverage

## BACKGROUND OF INVENTION

In dispensing precarbonated beverages it is difficult to consistently deliver to the customers, glass after glass, a beverage having the quality provided by the supplier. The loss in quality is caused by the escape of the $CO_2$ from the liquid during dispensing. The escape of the $CO_2$ for example from beer results in a flat, bitter or other most undesirable taste or quality. The escape of the $CO_2$ from beer in a keg is seen as foam, commonly referred to as the head, atop the liquid in the glass.

This foam, in most common known and used systems, develops during the dispensing time. A more uniform quality of product for consumption, however, can be obtained if the majority of the foam forms in the glass after the liquid has been dispensed thereinto. This however requires precise and uniform control of the temperature and pressure conditions as there is a critical inter-relationship of the two for each different beverage being dispensed. The most difficult beverages to dispense, while maintaining consistent quality, are beer, root beer and 7-Up®. The higher the temperature, the higher the pressure and more difficult to dispense.

0175143

- 2 -

Temperature preference is $38^O$F. to $50^O$F.

PRIOR ART

One proposal for ensuring minimum loss of $CO_2$ while dispensing beer is found in Canadian Patent 536,296 issued January 29, 1957. The proposal therein consists of accurately mixing compressed air and $CO_2$ and using such gas mixture as the propellant for driving the beer from the keg to the dispensing tap.

Canadian Patent 1,067,461, issued December 4, 1979 to Exacta-Draft Manufacturing Ltd., discloses a beer dispensing system wherein a control valve is included to control the air pressure exerted on the beverage in the keg to very close limits.

Canadian Patent 357,133 issued April 14, 1936 to I.A. Hartsell discloses a method of ensuring the $CO_2$ remains in the liquid beer by subjecting the glass to pressure during dispensing to avoid turbulence or agitation of the beer during dispensing.

Another dispensing system is disclosed in Canadian Patent 603,214 issued August 9, 1960 to Mechanical Research Ltd.

None of the prior proposals however, disclose contolling conditions of the air propellant in addition to pressure such as, for example, temperature and/or moisture content. Also, none of the known systems disclose cleaning or clarifying the compressed air. To applicant's knowledge, none of the presently known beverage dispensing systems use a power driven air compressor for pressurization. Piston compressors are commonly known as being the most reliable in use but, unfortunately, there are impurities in the compressed air such as oil and the like from the compressor,

## SUMMARY OF THE INVENTION

An object of the present invention is to provide a beverage dispensing system that is simple, relatively inexpensive and easily maintained and which will give consistent results in the quality of the dispensed beverage. A further object is to provide an air pressure beverage dispensing system wherein the temperature, pressure and vapor content of the air propellant is carefully controlled.

The foregoing is attained by utilizing compressed air, provided by a power driven compressor unit, wherein such compressed air propels the beverage from a beverage container to a dispensing valve and nozzle, said compressed air being passed through at least one condenser unit to reduce the moisture content and impurities therefrom and reduce the air, used as the propellant, to a preselected temperature. The compressor unit and keg for a small installation, i.e. one dispensing tap, can be located in a common refrigerated chamber or in separate places.

The compressor unit consists of a piston compressor that discharges into a pressure tank from which the air is directed to the keg to pressurize the same. The condenser may be internal and/or external of the tank. If internal only, the entire unit must be located in the

- 4 -

refrigerated compartment. For medium sized installations there may be a larger condenser located externally of the tank and in still larger installations there is a condenser within the tank in series with a condenser external of the tank.

The invention is illustrated by way of example with reference to the accompanying drawings wherein:

Figure 1 is a schematic of a draft beer dispensing system provided in accordance with the present invention;

Figure 2 is similar to Figure 1 but intended for dispensing a smaller volume during the same time frame;

Figure 3 is a top plan view of a compressor condenser unit for the system of Figure 1;

Figure 4 is right hand elevational view of Figure 3;

Figure 5 is a top plan view of a compressor, condenser and tank unit for a small volume dispensing system; and

Figure 6 is a vertical elevational view in partial section of Figure 5.

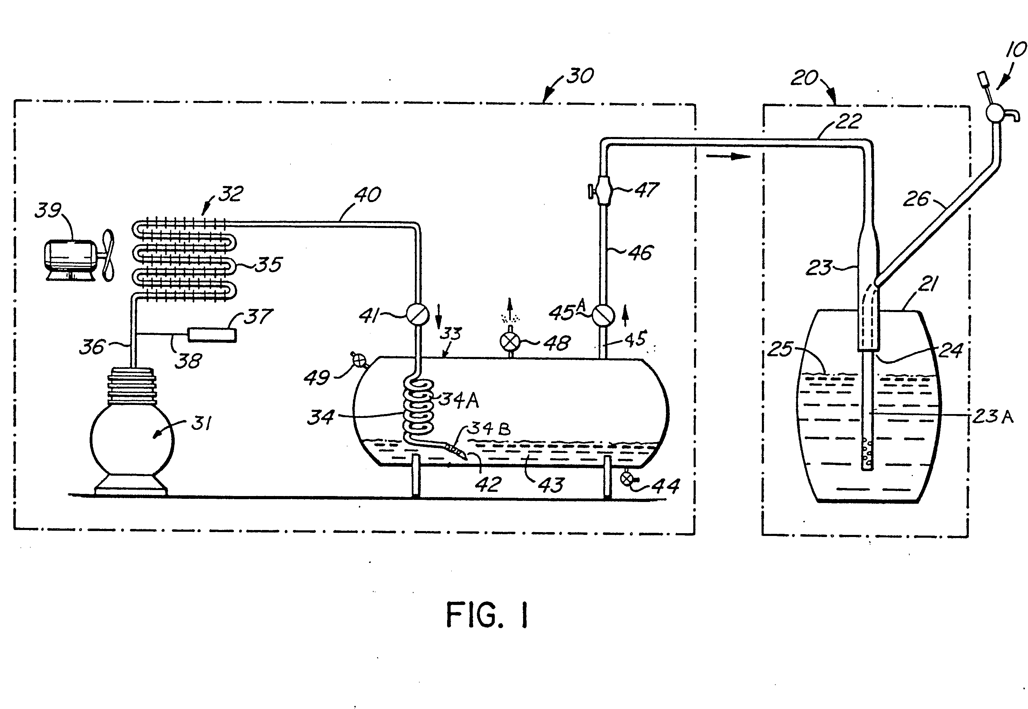

Referring to the drawings, there is illustrated in Figure 1 a beer dispensing system provided in accordance with the present invention consisting of a conventional hand control valve and dispensing nozzle 10, a refrigerated compartment 20 having a keg of beer 21 therein and a compressor condenser unit 30 providing compressed air under controlled temperature-pressure-humidity conditions for propelling the liquid beer from the keg through the nozzle when valve 10 is open.

Compressed air regulated to about 20 PSIG in conduit 22 is directed into the keg via a conventional stand pipe 23 discharging compressed air into the upper part of the keg through outlet 24. Liquid beer 25 in the keg flows through the stand pipe portion 23A in the keg through conduit 26 to the valve controlled nozzle 10 under the influence of the air pressure in the tank. This is all conventional and well known in the art.

The compressed air is supplied to conduit 22 by the compressor-condenser unit 30 which consists basically of a hermetically sealed compressor 31, a first condenser unit 32, a pressure tank 33 and a second condenser unit 34 located within the pressure tank. The compressor is a conventional piston type unit providing an air pressure supply of about 140 to 150 PSIG. The compressed air is directed to the coil 35 of condenser 32 via conduit 36 having a high-low pressure cut out control 37 connected thereto via conduit 38. The compressed air is cooled via Condenser 32 to about 50°F. and then passes on through conduit 40, one way flow control valve 41, coil 34A of condenser 34 discharging into the pressure tank 33 near the bottom thereof through condenser coil outlet 42. The flow of air is directed angularly downwardly toward the bottom of the tank and upstream of outlet 42 there are apertures 34B in the tube to ensure air flows should outlet 42 become clogged. Water 43, caused by cooling the compressed air, and oil as well as other impurities from the piston compressor, accumulates in the bottom of the pressure tank and may be bled therefrom, as required from time to time, by bleed valve 44. The pressure tank has a compressed air outlet 45 in the upper wall and connected thereto by suitable coupling means is a conduit 46. Conduit 46 has a one way flow control valve 45A therein, which is connected to an adjustable pressure regulator 47 that reduces the air pressure to approximately 20 PSIG. Conduit 22 is connected to the output side of the pressure regulator and the compressed air therein is preferably substantially free of vapor and impurities. With no vapor in the air no water is added to the liquid beer.

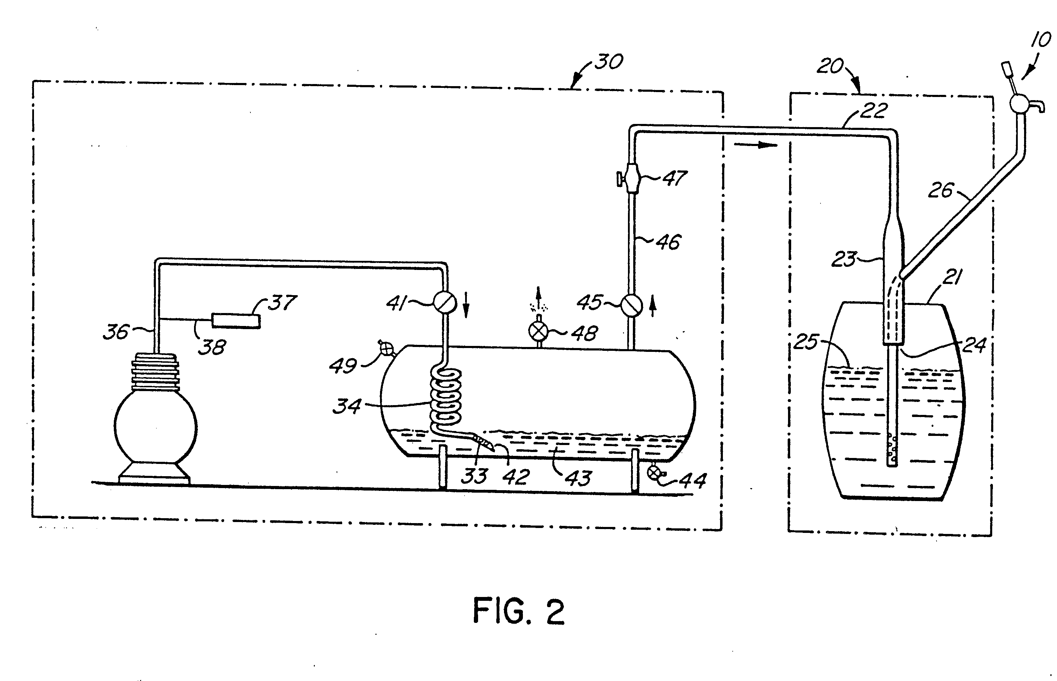

The pressure tank 33 is provided with a pressure relief valve 48 to prevent over-pressurization and an optional air bleed valve 49 that discharges to atmosphere. The temperature within the pressure tank for dispensing carbonated beverages will normally be within a lower limit of $28^{O}F$ (approximately $-2^{O}C.$) and an upper limit of $55^{O}F.$ (approximately $12^{O}C.$) operating at a predetermined substantially constant temperature. For dispensing beer the temperature is preferably maintained at $40^{O}F.$ with an operating pressure of 140 PSIG. The size of the condenser units i.e. BTU capacity is determined by the environmental temperature conditions prevailing where the system is operating and the volume of beer to be dispensed over a selected period of time. The beer keg is maintained at a temperature of preferably $40^{O}F.$ (approximately $5^{O}c.$) and the 20 PSIG pressure of air propellant is also maintained at approximately the same temperature. The system shown in Figure 2 is the same as Figure 1 except condenser 32 has been omitted. This system is suitable for a one tap dispenser installation. The system of Figure 1 is suitable for example in dispensing from two, three, four or more taps.

From the foregoing it can be seen that the compressed air propellant for a beverage dispensing system is controlled not only as to pressure but as to temperature, moisture and impurity content. This has been found, through experimentation, to provide consistent quality of the dispensed beverage. The temperature of the liquid in the beer keg is maintained, as is conventional, at a temperature of 40°F., approximately 5°C.

Experiments with the foregoing system has also shown there is an increase in the number of glasses dispensed from a beer keg. With existing systems, the number of glasses of beer dispensed from a keg is 170 - 180 while with the present it runs from 214 to 220 glasses. Also it has been found there is little foaming during dispensing with foaming occuring mainly after the liquid beer has been dispensed into the glass. This means of course the $CO_2$ has been retained in the liquid thereby rendering the glass of beer with a longer shelf life, i.e. doesn't go flat nearly as quickly.

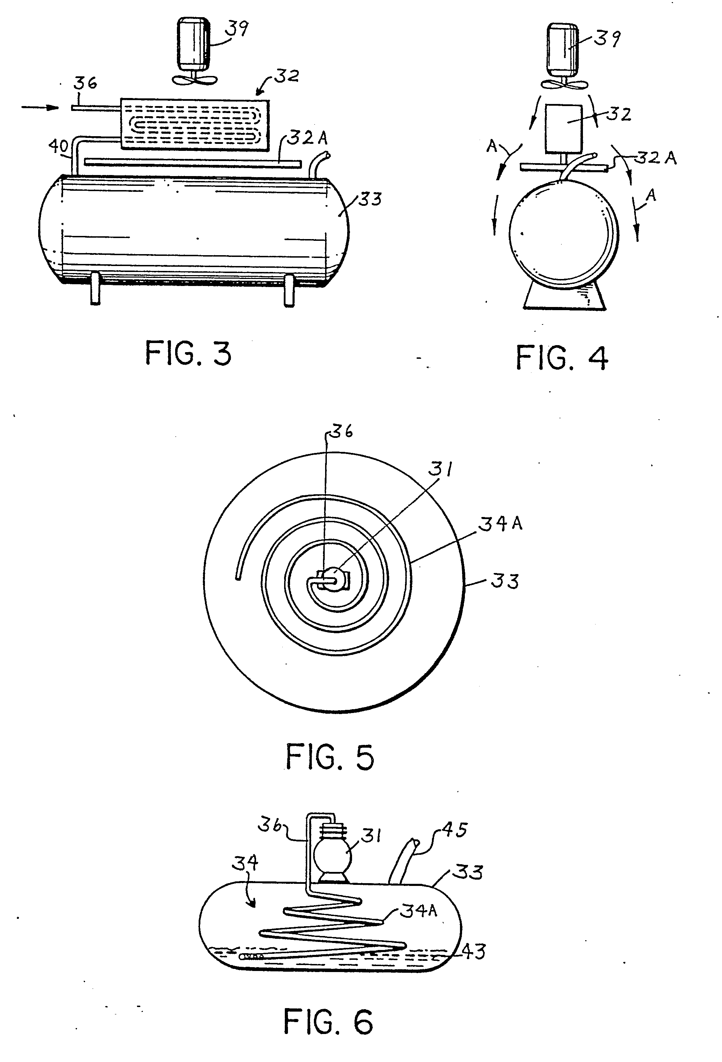

Figures 3 and 4 illustrate a physical set-up for the air pressurizing system 30 in the beer dispensing system as illustrated in Figure 1. The condenser 32 is mounted above the pressure tank 33, in any convenient manner, and interposed therebetween is a deflection plate 32A. Compressed air from the compressor 31 (not illustrated in Figure 3) flows by way of conduit 36 through the condenser 32 and into the pressure tank 33 by way of conduit 40. The power driven fan unit 39 drives air downwardly through the coils of the condenser unit 32 and after leaving the condenser the air is deflected outwardly as indicated by arrows A by deflection plate 32A so as to form an air curtain around the pressure tank 33. This air curtain isolates the pressure tank from atmospheric conditions thus allowing easier control of the temperature of the air within the tank under various environmental temperature conditions.

Figures 5 and 6 illustrate a compressor, condenser and tank unit for a beverage dispensing system of relatively small volume. From these figures, it will be noted the compressor unit 31 is mounted directly on top of a circular pressure vessel or tank 33 and compressed air from the compressor is directed by way of conduit 36 directly into a spiral coil unit 34A of condenser 34. As in Figure 1, there is illustrated vapor and other impurities 43 in the bottom of the tank which accumulates and are drained therefrom in any convenient manner as for example by a bleed valve 44 illustrated in Figure 1. Cooled, compressed, clean air is directed from the upper part of the tank by way of conduit 45 to the container containing the beverage to be dispensed through the dispensing valve unit 10. It is to be clearly understood the illustration in Figure 5 and 6 is only the compressor or pressurizing unit that provides the clean, controlled air temperature, propellant for dispensing the beverage in a system as illustrated in Figure 2.

The internal condenser 34 of Figure 1 is a helical cylindrical coiled conduit while in Figure 6 it is a spiral coil of tubing. Various different shapes of coil may be used.

With the disclosed system, there is no refrigerant for cooling the air but it has been found from actual practice the condensers 32 and/or 34 can be appropriately designed to reduce the air temperature to be consistent with that and approximately equal to the temperature of the beverage to be dispensed. Some experimentation and calculation will be required to provide an appropriate BTU size of condensers 32 and 34, depending upon environmental conditions existing wherein the system is utilized. In an experimental system it was found that approximately 125 feet of 5/16th inch copper tubing in the condenser coil 34A of the system illustrated in Figure 6 would provide appropriate temperature and cleaning of the air for a beverage dispensing system. In the system illustrated in Figure 1, a condenser unit 32 having approximately a 6,000 BTU capacity was found effective for dispensing draft beer of approximately 36 glasses per minute, the temperature of the air after having passed through condenser 32 and condenser 34 being approximately 40°F. (approximately 5°C.) in conduit 45, this temperature equalling the temperature of the draft beer in keg 21. The temperatures and pressures of course will be modified depending upon the beverage being dispensed. Again some experimentation and design considerations are required, depending upon environmental conditions.

- 11 -

In existing beer dispensing systems, occasionally foaming has occurred at the tap, necessitating shut-down for a period of time before commencing dispensing of further draft beer. Experimentation with the system disclosed therein has proven there was no foam at the tap which resulted in shutting off the system as in prior art units therefore allowing continuous dispensing of draft beer.

While the present invention is primarily concerned with using a power driven piston type compressor in a beverage dispensing system the pressure unit and condenser may be used in other systems where clean, temperature controlled, substantially moisture free compressed air is required for example in a pressure spray painting system.

0175143

CLAIMS

1. An air pressure system for providing clean air under pressure to dispense carbonated beverages, liquid sprayers and the like that includes a power driven piston type air compressor (31) and a pressure tank (33) receiving the air from the compressor, compressed air being discharged from the pressure tank through a pressure regulator characterized in at least one condenser (32, 34) comprising a conduit (35, 34A) of selected length through which the compressed air passes prior to being discharged into the pressure tank for cooling the compressed air to a selected temperature as it flows under pressure to the pressure tank and for separating the moisture and impurities from the air, said condenser conduit being coiled and discharging (42) into the lower portion of the pressure tank at a position below an outlet (45) from said pressure tank, in an upper portion thereof, for the clarified pressurized air.

2. An air pressure system as defined in Claim 1, for dispensing draft beer from a keg characterized in that the pressure tank is maintained at a pressure of approximately 140 PSIG and the clarified pressurized air therefrom is reduced to approximately 20 PSIG by a pressure reducing valve (45A)

3. An air pressure system as defined in Claims 1 or 2, characterized in that the pressurized air leaving the pressure tank is approximately 40°F.

4.          An air pressure system as defined in Claims 1, 2 or 3 characterized in that the condenser is located internally (34) or externally (32) or both internally and externally of the pressure tank (33).

5.          An air pressure system as defined in Claims 1, 2 or 3 characterized in that there is a first condenser comprising a condiut of selected length located externally of the pressure tank and in an air flow path (A) and in that the air in such flow path (A), after passing by the condenser conduit (35), is deflected by a deflector (32A) to provide an air curtain around the pressure tank.

6.          An air pressure system as defined in Claim 1, characterized in that a first condenser (32) is located ·vertically above the pressure tank and separated therefrom by a deflector plate (32A) directing air from a power driven fan (39) after it has passed by the conduit of the condenser (32) outwardly along opposite sides of the tank providing an air curtain for the latter separating the air pressure tank from ambient conditions.

7.          A draft beer dispensing system that includes a beer keg supply (21) connected to a valve dispensing outlet (10) with beer from the keg being forced under pressure to the dispensing outlet by pressurizing the keg characterized in the beer keg (21) is pressurized by an air pressurizing system that includes a power driven air compressor (31) discharging air under pressure into a pressure tank (33) through a condenser (32, 34) that consists of a selected length of conduit coiled helically, said conduit cooling and clarifying the pressurized air as it passes therethrough, the cooled, clarified air from the pressure tank being directed by conduit means (45, 46, 22) into the beer keg.

8. A draft beer dispensing system as defined in Claim 7 characterized in that the condenser (32) is external of the air pressure tank and separated therefrom by an air flow deflector plate (32A) that directs air, causes it to flow past the conduit of the condenser, in a curtain around the air pressure tank.

9. A draft beer dispensing system as defined in Claims 7 or 8 characterized in that the condenser (32, 34) cools the pressurized air flowing therethrough to approximately $40^{\circ}$F. (approximately $5^{\circ}$C.).

10. A draft beer dispensing system characterized in that the air pressure in the pressure tank is approximately 140 PSIG and prior to being directed into the beer keg is reduced to approximately 20 PSIG.

11. A draft beer dispensing system as defined in Claim 8 characterized in that the beer keg (21) is maintained at a temperature of approximately $40^{\circ}$F. and the pressurized air is introduced thereinto at approximately the same temperature at a pressure of approximately 20 PSIG.

FIG. I

FA-74110/EF
0175143/9

FIG. 2

FIG. 3

FIG. 4

FIG. 5

FIG. 6